# EUROPEAN PATENT SPECIFICATION

(11) **EP 4 527 038 B1**
(45) Date of publication and mention of the grant of the patent: **10.06.2026**
(21) Application number: 23723025.5
(22) Date of filing: 19.04.2023
(51) Int. Cl.: H04L 9/40, G06F 21/55, G06N 20/00, G06N 5/045

(54) **THREAT DETECTION FOR CLOUD APPLICATIONS**
BEDROHUNGSERKENNUNG FÜR CLOUD-ANWENDUNGEN
DÉTECTION DE MENACE POUR APPLICATIONS EN NUAGE

(30) Priority: 18.05.2022 US 202217747366
(43) Date of publication of application: 26.03.2025
(73) Proprietor: Microsoft Technology Licensing, LLC, Redmond, WA 98052-6399 (US)
(72) Inventor: GOLDSTEIN, Eran, Redmond, Washington 98052-6399 (US); HEN, Idan, Redmond, Washington 98052-6399 (US); SHAVIT, Shalom Shay, Redmond, Washington 98052-6399 (US)
(74) Representative: Page White Farrer
(86) International application number: PCT/US2023/019016
(87) International publication number: WO 2023/224756

(56) References cited:
- US-A1- 2017 251 013
- US-A1- 2020 310 889
- US-A1- 2020 336 503

## Description

### BACKGROUND

Cloud computing platforms offer higher efficiency, greater flexibility, lower costs, and better performance for applications and services relative to "on-premises" servers and storage. Accordingly, users are shifting away from locally maintaining applications, services, and data and migrating to cloud computing platforms. This migration has gained the interest of malicious entities, such as hackers. Hackers attempt to gain access to valid cloud subscriptions and user accounts in an attempt to steal and/or hold ransom sensitive data or leverage the massive amount of computing resources for their own malicious purposes.

US2020/336503 discloses a method of detecting anomalous user behavior in a cloud environment. The method includes: receiving a vector that comprises counts of actions taken by the user during a current time interval, determining whether an action count in the vector is greater than a global mean; building a scale table by combining new action skills that are above a threshold and original action skills if below the threshold, and identifying outliers when the action count is greater than the global mean multiplied by a corresponding action scale from the scale table.

US2017/251013 discloses techniques for discovery and management of applications in a computing environment of an organization are disclosed. A security management system discovers use of applications within a computing environment to manage access to applications for minimizing security threats and risks in a computing environment of the organization. The security management system obtains network data about network traffic to identify unique applications. The security management system performs analysis and correlation, including use of one or more data sources, to determine information about an application. The system computes a measure of security for an application ("an application risk score") and a user ("a user risk score"). The score is analyzed to determine a threat of security posed by the application based on use of the application. The security system performs one or more instructions to configure access permitted by an application, whether access is denied or restricted.

US2020/310889 discloses a method for computer or network security. The method includes: providing an alert to a device of a first cloud user in response to determining an operation performed on a cloud resource is inconsistent with a behavior profile that defines normal operation of the cloud resource; receiving feedback from the first cloud user regarding the alert; and generating, for a second, different cloud user and by prioritizing a second alert based on the feedback from the first cloud user, a second alert.

### SUMMARY

Systems and methods are described herein for threat detection for cloud applications. In one aspect, a log that includes a record of a control plane operation executed by a cloud application is received. A feature set is generated based on the record. The feature set is provided to an anomaly detection model that is configured to output an anomaly score indicative of a degree to which the control plane operation is anomalous based on the feature set provided thereto. A determination that a security alert should be generated is made based at least on the anomaly score output by the anomaly detection model. Responsive to determining that the security alert should be generated, the security alert is generated.

The determination that a security alert should be generated is made based at least on the anomaly score output by the anomaly detection model and an indication that the control plane operation is included in a list of impactful operations. Particularly, the determination is based on the list of impactful operations in that: the log is filtered based on the list of impactful operations, such that only records of impactful operations are analyzed by the feature set generator and the one or more anomaly detection models.

In an example aspect, respective subsets of the feature set are provided to two or more anomaly detection models from among: an application-level anomaly detection model that is configured to output an application-level anomaly score indicative of a degree to which the execution of the control plane operation is anomalous with respect to the cloud application based on the feature set provided thereto; a resource-level anomaly detection model that is configured to output a resource-level anomaly score indicative of a degree to which the execution of the control plane operation is anomalous with respect to a resource associated with the control plane operation based on the feature set provided thereto; a subscription-level anomaly detection model that is configured to output a subscription-level anomaly score indicative of a degree to which the execution of the control plane operation is anomalous with respect to a subscription associated with the control plane operation based on the feature set provided thereto; and a tenant-level anomaly detection model that is configured to output a tenant-level anomaly score indicative of a degree to which the execution of the control plane operation is anomalous with respect to a tenant associated with the control plane operation based on the feature set provided thereto. The determination that the security alert should be generated is made based at least on the anomaly scores output by the two or more anomaly detection models.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 is a block diagram of an example network-based computing system configured to perform threat detection for cloud applications, in accordance with an embodiment.
FIG. 2 is a block diagram of a system in which a resource manager is configured to generate and store logs and a threat detection engine is configured to access the stored logs, in accordance with an embodiment.
FIG. 3 is a block diagram of the threat detection engine of FIG. 1 in accordance with an embodiment.
FIG. 4 depicts a flowchart of a process for detecting threats for cloud applications.
FIG. 5 depicts a flowchart of a process for generating a seasonality score used in detecting threats for cloud applications, according to an example embodiment.
FIG. 6 is a diagram of a hierarchy associated with models used to generate anomaly scores, according to an example embodiment.
FIG. 7 is a block diagram of the anomaly detection models of FIG. 3, according to an example embodiment.
FIG. 8 is a block diagram of the security alert generator of FIG. 3, according to an example embodiment.
FIG. 9 is a block diagram of an example computing device that may be used to implement embodiments.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined within tolerances that are acceptable for operation of the embodiment for an application for which it is intended.

If the performance of an operation is described herein as being "based on" one or more factors, it is to be understood that the performance of the operation may be based solely on such factor(s) or may be based on such factor(s) along with one or more additional factors. Thus, as used herein, the term "based on" should be understood to be equivalent to the term "based at least on."

Numerous exemplary embodiments are now described. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Systems and Methods for Threat Detection for Cloud Applications

Cloud-based systems provide various types of services, which differ from each other in terms of usability (e.g., trigger-based, scheduled/manual usage) and applicative purpose, which dictates the type of resources they are allowed to access, and operations they are allowed to perform. A cloud provider may implement or otherwise use a centralized mechanism (e.g., Azure^{®} Resource Manager^{™} in Microsoft^{®} Azure^{®} or CloudTrail^{®} in Amazon Web Services^{®}) to monitor and control the activity of a cloud application in terms of both authentication and authorization. Authentication refers to verifying that a particular application is trying to perform a desired action, while authorization refers to determining whether the particular application is allowed to perform the desired action or not. If a malicious adversary compromises a cloud application, such malicious adversary may be able to execute certain operations that have a high impact from a security standpoint, such as accessing sensitive data or performing sensitive actions.

The present disclosure is directed to threat detection for cloud applications. A system and method perform threat detection by detecting control plane operations (e.g., resource management operations, resource configuration operations, resource access enablement operations, etc.) that may be indicative of malicious behavior. For example, if a malicious entity, such as a hacker, compromises an application or computing device associated with a cloud-based system, the malicious entity may perform control plane operations that impact the cloud-based system, associated applications, and/or associated users. Such control plane operations, also referred to herein as "impactful operations", may include operations that, when executed, modify a rule of a firewall, create a rule of a firewall, access authentication keys (e.g., host keys, user keys, or public and private key pairs), modify a compute cluster, create a compute cluster, modify a security rule (e.g., a security alert suppression rule), create a security rule, access a storage (e.g., a secret storage), and/or otherwise impact the cloud-based system, an application associated with the cloud-based system, and/or a user associated with the cloud-based system.

However, impactful operations may be performed by cloud applications as part of their intended operation. Moreover, in a cloud-based system, an extremely large volume of such operations may be executed over a relatively short time period. For at least these reasons, it is not trivial to distinguish between malicious and benign executions of an impactful operation. In accordance with the present disclosure, a threat detection engine is configured to leverage one or more anomaly detection models, e.g. machine learning (ML) models, to generate one or more anomaly scores indicative of a degree to which the execution of a control plane operation is anomalous. A log that includes a record of a control plane operation executed by a cloud application is received. A feature set is generated based on the record. The feature set is provided to at least one anomaly detection model (e.g., a ML model) that is configured to output an anomaly score indicative of a degree to which the execution of the control plane operation is anomalous based on the feature set provided thereto. A determination is made that a security alert should be generated based at least on the anomaly score. Responsive to the determination, the security alert is generated.

The anomaly detection model may be any type of ML model suitable for generating an anomaly score indicative of a degree to which the execution of the control plane is anomalous based on the feature set provided thereto. For example, in accordance with an embodiment, the anomaly detection model is a multivariate anomaly detection model. In this context, a rich, robust, and expressive behavior profile for a cloud application is built.

Furthermore, the anomaly detection model may be configured to output a set of explainability scores. Each explainability score corresponds to a feature of the feature set provided to the anomaly detection model and indicates a weight of the feature in determining the anomaly score. In this context, the generated security alert may include information associated with the explainability scores, reflecting relative importance of each feature to the anomaly score.

In accordance with a particular embodiment, a threat detection engine provides respective subsets of the feature set to two or more anomaly detection models. This enables the threat detection engine to build a behavior profile that includes dependencies and correlations between several aspects of an execution of a control plane operation. For example, the anomaly detection models may include, but are not limited to: an application-level anomaly detection model that is configured to output an application-level anomaly score indicative of a degree to which the execution of the control plane operation is anomalous with respect to the cloud application based on the subset provided thereto; a resource-level anomaly detection model that is configured to output a resource-level anomaly score indicative of a degree to which the execution of the control plane operation is anomalous with respect to a resource associated with the control plane operation based on the subset provided thereto; a subscription-level anomaly detection model that is configured to output a subscription-level anomaly score indicative of a degree to which the execution of the control plane operation is anomalous with respect to a subscription associated with the control plane operation based on the subset provided thereto; and a tenant-level anomaly detection model that is configured to output a tenant-level anomaly score indicative of a degree to which the execution of the control plane operation is anomalous with respect to a tenant associated with the control plane operation based on the subset provided thereto.

In the example threat detection engine described above, a determination that a security alert should be generated is made based at least on the anomaly scores output by the two or more anomaly detection models. Therefore, the execution of the control plane operation is evaluated with respect to different levels (e.g., an application level, a resource level, a subscription level, and/or a tenant level) in a hierarchy associated with the control plane operation. Furthermore, each anomaly detection model may output a respective set of explainability scores, as described above.

In an example embodiment, a threat detection engine in accordance with an embodiment is configured to determine that the security alert should be generated based at least on the anomaly score and an indication that the control plane operation is included in a list of impactful operations. This enables the use of domain-specific knowledge to filter out events that are not deemed impactful. Furthermore, each impactful operation may be mapped to a potential security attack type (e.g., a lateral movement security attack, an execution security attack, etc.).

Techniques described herein evaluate a degree to which an execution of a control plane operation is anomalous (from one or more perspectives) and also consider whether such control plane operation is impactful in determining whether a security alert should be generated in a way that improves threat detection for cloud applications. In this context, threats can be identified and mitigation steps can be taken to improve performance. Thus, a threat may be identified based at least: anomalous activity scores, , and a list of impactful operations; and in embodiments also based on explainability scores, and/or other information relating to control plane operations executed by a cloud application, as described herein.

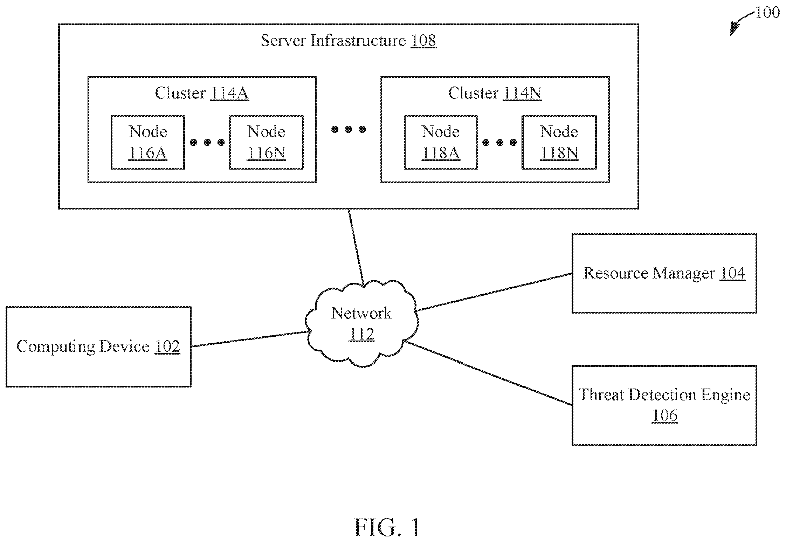

To help illustrate the aforementioned systems and methods, FIG. 1 will now be described. In particular, FIG. 1 is a block diagram of an example network-based computing system 100 ("system 100" hereinafter) configured to perform threat detection for cloud applications, in accordance with an embodiment. As shown in FIG. 1, system 100 includes a computing device 102, a resource manager 104, a threat detection engine 106, and a server infrastructure 108. Each of computing device 102, resource manager 104, threat detection engine 106, and server infrastructure 108 are communicatively coupled to each other via network 112. Network 112 may comprise one or more networks such as local area networks (LANs), wide area networks (WANs), enterprise networks, the Internet, etc., and may include one or more of wired and/or wireless portions.

Server infrastructure 108 is a network-accessible server set providing a cloud-based environment or platform. As shown in FIG. 1, server infrastructure 108 includes clusters 114A and 114N. Each of clusters 114A and 114N may comprise a group of one or more nodes (also referred to as compute nodes) and/or a group of one or more storage nodes. For example, as shown in FIG. 1, cluster 114A includes nodes 116A-116N and cluster 114N includes nodes 118A-118N. Each of nodes 116A-116N and/or 118A-118N are accessible via network 112 in a "cloud-based" embodiment to build, deploy, and manage applications and services. Any of nodes 116A-116N and/or 118A-118N may be a storage node that comprises a plurality of physical storage disks that are accessible via network 112 and is configured to store data associated with the applications and services managed by nodes 116A-116N and/or 118A-118N.

In an embodiment, one or more of clusters 114A and/or 114N may be co-located (e.g., housed in one or more nearby buildings with associated components such as backup power supplies, redundant data communications, environmental controls, etc.) to form a datacenter, or may be arranged in other manners. Accordingly, in an embodiment, one or more of clusters 114A and/or 114N may be a datacenter in a distributed collection of datacenters. In accordance with an embodiment, system 100 comprises part of the Microsoft^{®} Azure^{®} cloud computing platform, owned by Microsoft Corporation of Redmond, Washington, although this is only an example and not intended to be limiting.

Each of node(s) 116A-116N and 118A-118N may comprise one or more server computers, server systems, and/or computing devices. Each of node(s) 116A-116N and 118A-118N may be configured to execute one or more software applications (or "applications") and/or services and/or manage hardware resources (e.g., processors, memory, etc.), which may be utilized by users (e.g., customers) of the network-accessible server set. Node(s) 116A-116N and 118A-118N may also be configured for specific uses. For example, any of nodes 116A-116N and/or 118A-118N may be configured to execute resource manager 104 and/or threat detection engine 106. It is noted that resource manager 104 and/or threat detection engine 106 may be incorporated as services on a computing device external to cluster 114A and cluster 114N and/or server infrastructure 108. It is further noted that threat detection engine 118 and resource manager 120 may be incorporated with each other.

A user may be enabled to utilize the applications and/or services (e.g., resource manager 104 and/or threat detection engine 106) offered by the network-accessible server set via computing device 102. For example, a user may be enabled to utilize the applications and/or services offered by the network-accessible server set by signing-up with a cloud services subscription with a service provider of the network-accessible server set (e.g., a cloud service provider). Upon signing up, the user may be given access to a portal of server infrastructure 108, not shown in FIG. 1. A user may access the portal via computing device 102 (e.g., by a browser application executing thereon). For example, the user may use a browser executing on computing device 102 to traverse a network address (e.g., a uniform resource locator) to a portal of server infrastructure 108, which invokes a user interface (e.g., a web page) in a browser window rendered on computing device 102. The user may be authenticated (e.g., by requiring the user to enter user credentials (e.g., a username, password, PIN, etc.)) before being given access to the portal. Computing device 102 may be any type of computing device, including a mobile computing device (e.g., a Microsoft^{®} Surface^{®} device, a laptop computer, a notebook computer, a tablet computer such as an Apple iPad^{™}, a netbook, etc.) or a stationary computing device such as a desktop computer or PC (personal computer), although these examples are not intended to be limiting.

Upon being authenticated, the user may utilize the portal to perform various cloud management-related operations (also referred to as "control plane" operations). Such operations include, but are not limited to, allocating, modifying, and/or deallocating cloud-based resources, building, managing, monitoring, and/or launching applications (e.g., ranging from simple web applications to complex cloud-based applications), configuring one or more of node(s) 116A-116N and 118A-118N to operate as a particular server (e.g., a database server, OLAP (Online Analytical Processing) server, etc.), etc. Examples of cloud-based resources include, but are not limited to virtual machines, storage disks (e.g., maintained by storage node(s) of server infrastructure 108), web applications, database servers, data objects (e.g., data file(s), table(s), structured data, unstructured data, etc.) stored via the database servers, etc. The portal may be configured in any manner, including being configured with any combination of text entry, for example, via a command line interface (CLI), one or more graphical user interface (GUI) controls, etc., to enable user interaction.

Resource manager 104 may be configured to generate a log (also referred to as an "activity log") each time a user logs into his or her cloud services subscription via the portal. The log may be stored in one or more storage nodes of server infrastructure 108 and/or in a data storage external to server infrastructure 108. The period in which a user has logged into and logged off from the portal may be referred to as a portal session. Each log may include a record of a control plane operation that was executed during a given portal session, along with other characteristics associated with the control plane operation. For example, each log may include a record that specifies an identifier for the control plane operation, an indication as to whether the control plane operation was successful or unsuccessful, an identifier of the resource that is accessed or was attempted to be accessed, a time stamp indicating a time at which the control plane operation was issued, a network address from which the control plane operation was issued (e.g., the network address associated with computing device 102), an application identifier that identifies an application (e.g., the portal or a browser application) from which the control plane operation was issued, a user identifier associated with a user (e.g., a username by which the user logged into the portal) that issued the control plane operation, an identifier of the cloud-based subscription from which the resource was accessed or attempted to be accessed, a type of the entity (e.g., a user, a role, a service principal, etc.) that issued the control plane operation, a type of authentication scheme (e.g., password-based authentication, certificate-based authentication, biometric authentication, token-based authentication, multi-factor authentication, etc.) utilized by the entity that issued the control plane operation, an autonomous system number (ASN) associated with the entity that issued the control plane operation (e.g., a globally unique identifier that defines a group of one or more Internet protocol (IP) prefixes utilized by a network operator that maintains a defined routing policy), etc. An example of resource manager 104 includes, but is not limited to, Azure^{®} Resource Manager^{™} owned by Microsoft^{®} Corporation, although this is only an example and is not intended to be limiting.

Threat detection engine 106 may be configured to detect threats for cloud applications in various ways. Threat detection 106 is configured to analyze logs comprising records of executions of control plane operations and determine whether such records are indicative of malicious behavior. In accordance with an embodiment, threat detection engine 106 may be configured to detect attempts and/or executions of control plane operations that occur in a particular time period or window. It is noted that threat detection engine 106 is configured to analyze certain types of control plane operations (and not all control plane operations) that are more likely to be representative of malicious behavior (e.g., impactful operations, as described above and elsewhere herein). In accordance with an embodiment, threat detection engine 106 may be implemented in and/or incorporated with Microsoft^{®} Defender for Cloud^{™} published by Microsoft^{®} Corp, or Microsoft^{®} Sentinel^{™} published by Microsoft^{®} Corp., etc.

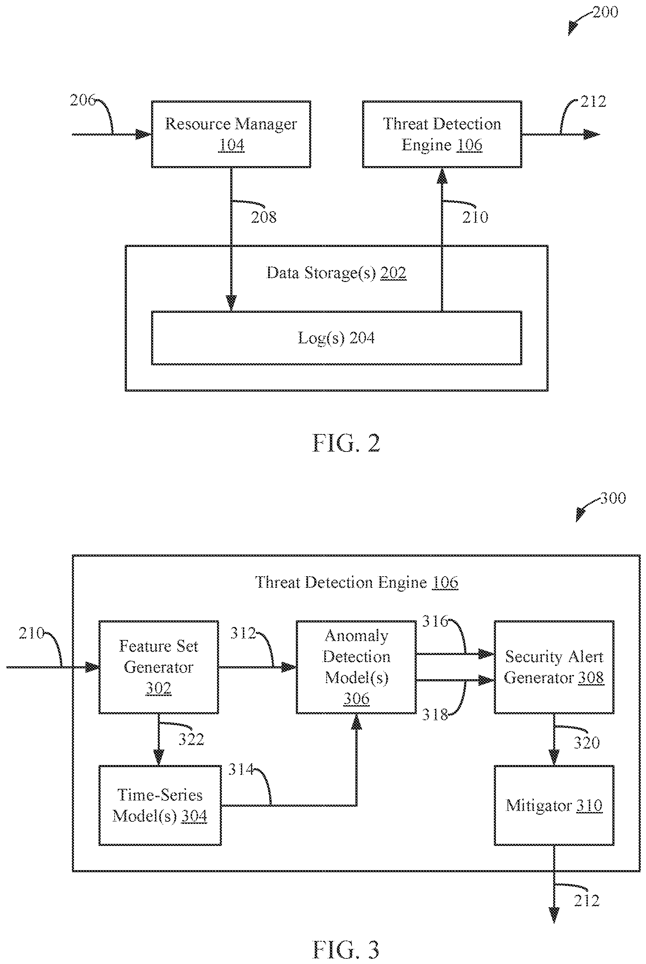

Responsive to determining a threat, threat detection engine 106 may be configured to generate a security alert. Furthermore, and as will be discussed with respect to FIGS. 2-4 below, threat detection engine 106 may cause a mitigation step to be performed that mitigates the threat. Depending on the implementation, the mitigation step may be performed automatically (e.g., by threat detection engine 106, resource manager 104, or another component of system 100), manually (e.g., by a user of computing device 102, by an administrator of an enterprise system including computing device 102, or by a developer associated with system 100), or by a combination of automatic and manual mitigation techniques. Mitigation steps may include, contacting a user corresponding to an account associated with the execution of the control plane operation, remediating a compromised service account, remediating comprised resources and/or subscription, and/or any other mitigating steps described elsewhere herein, or as would be understood by a person of skill in the relevant art(s) having benefit of this disclosure. For example, remediating a compromised service account may include one or more of: reviewing credentials related to the account, reviewing activities performed by a service principal associated with the account (e.g., by reviewing activity logs), and/or identifying suspicious activities. Remediating compromised resources and/or subscriptions may include: changing credentials associated with the resources and/or subscriptions, reviewing identity and access management permissions, removing permissions of unfamiliar (e.g., malicious or anomalous) user account(s), reviewing alerts in a firewall or other antivirus program related to the resources and/or subscriptions, evaluate alerts associated with the resources and/or subscriptions, and/or review activities performed in compromised resources and/or subscriptions (e.g., by reviewing activity logs) and identifying suspicious activities.

To help further illustrate the features of threat detection engine 106 in accordance with embodiments, FIG. 2 will now be described. In particular, FIG. 2 is a block diagram of a system 200 in which a resource manager is configured to generate and store logs and a threat detection engine is configured to access the stored logs, in accordance with an embodiment. As shown in FIG. 2, system 200 includes: resource manager 104 and threat detection engine 106, as described above with respect to FIG. 1, and data storage(s) 202. Data storage(s) 202 may include log(s) 204 and/or any other information described herein. As shown in FIG. 2, data storage(s) 202 may be external to resource manager 104 and threat detection engine 106; however, it is also contemplated that all or a portion of data storage(s) 202 may be internal to a computing device executing either of resource manager 104 and/or threat detection engine 106. Furthermore, data storage(s) 202 may be included in a storage node of clusters 114A and/or 114N of FIG. 1, or in a storage device external to server infrastructure 108.

As shown in FIG. 2, resource manager 104 is configured to receive information 206 from server infrastructure 108 of FIG. 1 (e.g., by network 112) and generate log 208. Resource manager 104 stores log 208 in log(s) 204 in data storage(s) 202. In accordance with an embodiment, resource manager 104 receives information 206 for a portal session of a user and generates log 208 associated with the portal session. As described above, log 208 may include a record of a control plane operation that was executed during a given portal session, along with other details associated with the control plane operation.

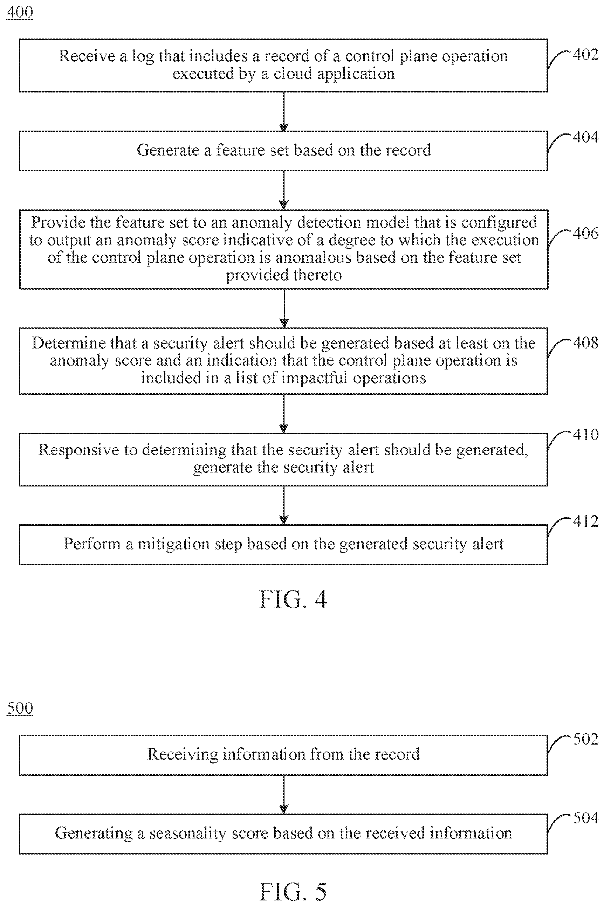

As shown in FIG. 2, threat detection engine 106 is configured to access stored logs 210 of log(s) 204, determine if a security alert should be generated based at least on information included in log(s) 204, and if it is determined that a security alert should be generated, generate the security alert and optionally cause a mitigation step to be performed by generating a mitigation signal 212. In accordance with an embodiment, and as will be discussed further below with respect to FIGS. 3 and 4, threat detection engine 106 is configured to generate a feature set based on information extracted from stored logs 210, generate at least one anomaly score based on the feature set, determine that a security alert should be generated based at least on the at least one anomaly score, generate the security alert, and cause a mitigation step to be performed based on the generated security alert. As will be discussed further below,. threat detection engine 106 includes one or more anomaly detection models for generating an anomaly score based on the feature set or a subset of the feature set. These may include one or more trained ML models. In embodiments, and as will be discussed below with respect to FIG. 5, threat detection engine 106 may include one or more time-series models configured to generate a seasonality score based on received information associated with stored logs 210 and such seasonality score(s) may be used as features input to the aforementioned anomaly detection models.

As discussed above, threat detection engine 106 may cause a mitigation step to be performed based on a generated security alert by generating mitigation signal 212. For example, mitigation signal 212 may be a notification (e.g., to an administrator) that indicates a threat has been detected, provides a description of the threat (e.g., by specifying the control plane operations associated with the threat, specifying the IP address(es) from which the control plane operations were initiated, times at which the control plane operations occurred, an identifier of the entity that initiated the control plane operations, an identifier of the resource(s) that were accessed or attempted to be accessed, one or more generated anomaly scores, one or more explainability scores, etc.), causes an access key utilized to access the resource(s) to be changed, or causes access to the resource(s) to be restricted for the entity. The notification may comprise a short messaging service (SMS) message, a telephone call, an e-mail, a notification that is presented via an incident management service, a security tool, etc. Threat detection engine 106 may cause an access key utilized to access the resource(s) to be changed (e.g., rotated) by sending a command to resource manager 104. For example, resource manager 104 may maintain a plurality of keys for a given entity (e.g., a primary key and a secondary key). Responsive to receiving the command, resource manager 104 may rotate the key to be utilized for accessing the resource (e.g., switch from using the primary key to using the secondary key). Threat detection engine 106 may cause access to a resource to be restricted (e.g., by limiting or preventing access) for the entity attempting access by sending a command to resource manager 104 that causes resource manager 104 to update access and/or permission settings for the entity with regards to the resource. It is noted that notifications may be issued responsive to detecting potentially malicious control plane operations regardless of whether such operations are actually malicious. In this way, an administrator may decide for himself or herself as to whether the detected operations are malicious based on an analysis thereof.

Threat detection engine 106 may be configured to detect threats for cloud applications in various ways, in embodiments. For example, FIG. 3 is a block diagram 300 of the threat detection engine 106 of FIG. 1, in accordance with an embodiment. As shown in FIG. 1, threat detection engine 106 includes a feature set generator 302, one or more time-series model(s) 304, one or more anomaly detection model(s) 306, a security alert generator 308, and a mitigator 310. Depending on the implementation, any of feature set generator 302, one or more time series model(s) 304, one or more anomaly detection model(s) 306, security alert generator 308, and/or mitigator 310 may be implemented as services executing on the same computing device. Alternatively, any of the components of threat detection engine 106 may be executed on separate computing devices configured to communicate with each other over a network (e.g., one or more wired networks, one or more wireless networks, and/or a combination of wired and wireless networks). Threat detection engine 106 is described below with respect to FIG. 4. FIG. 4 depicts a flowchart 400 of a process for detecting threats for cloud applications, in accordance with the present disclosure. Threat detection engine 106 operates according to flowchart 400. Further structural and operational embodiments will be apparent to persons skilled in the relevant art(s) based on the following description of FIGS. 3 and 4.

Flowchart 400 of FIG. 4 begins with step 402. In step 402, a log is received. The log includes a record of a control plane operation executed by a cloud application. For example, as shown in FIG. 3, threat detection engine 106 receives stored logs 210 by accessing log(s) 204 stored in data storage(s) 202). Alternatively, logs may be streamed to threat detection engine 106 (e.g., by resource manager 104 of FIG. 1).

In step 404, a feature set is generated based on the record. Feature set generator 302 is configured to generate the feature set 312. Feature set 312 may include any feature associated with the control plane operation executed by the cloud application, such as but not limited to, a day of the week the control plane operation was executed, a time of day the control plane operation was executed, a name or operation identifier (ID) of the control plane operation, a service ID (e.g., a service principal object ID) associated with the cloud application, a resource ID (e.g., of a resource and/or group of resources) to which the control plane operation was applied, and/or any other feature associated with the cloud plane operation executed by the cloud application suitable for detecting threats in the cloud application.

In accordance with an embodiment, the feature set generated in step 404 includes at least one seasonality score. For example, as shown in FIG. 3, threat detection engine 106 includes one or more time-series model(s) 304 ("time-series models 304" hereinafter). Time-series model(s) 304 receive information 322 obtained from the aforementioned record and generate one or more seasonality scores 314. Time-series model(s) 304 will be discussed further below with respect to FIG. 5.

In step 406, the feature set is provided to an anomaly detection model that is configured to output an anomaly score indicative of a degree to which the execution of the control plane operation is anomalous based on the feature set provided thereto. As shown in FIG. 3, feature set 312 is provided to anomaly detection model(s) 306. Anomaly detection model(s) 306 are configured to output respective anomaly score(s) 316 indicative of a degree to which the execution of the control plane operation is anomalous based on feature set 312. In accordance with an embodiment, anomaly detection model(s) 306 are further configured to output respective set(s) of explainability scores 318, each explainability score of the respective set of explainability scores corresponding to a feature of feature set 312 and indicating a weight of the feature in determining the respective anomaly score of respective anomaly score(s) 316.

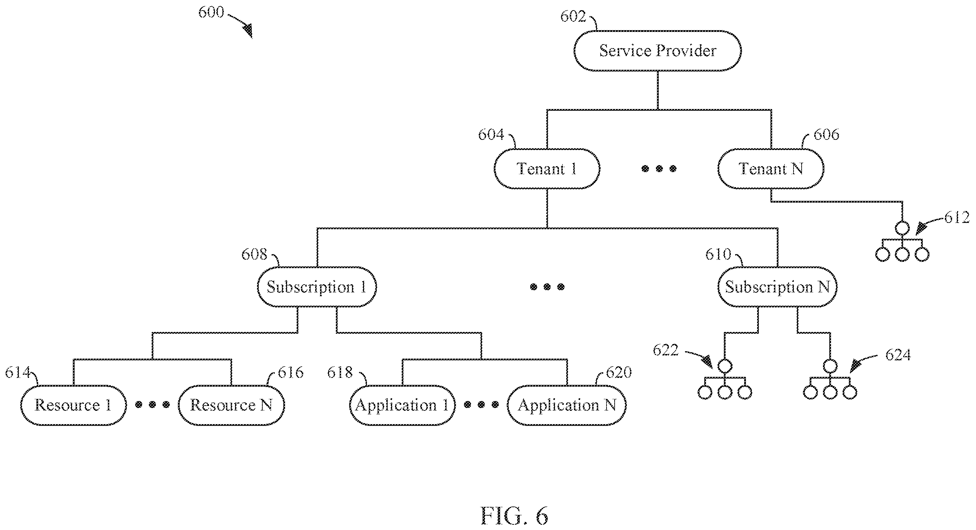

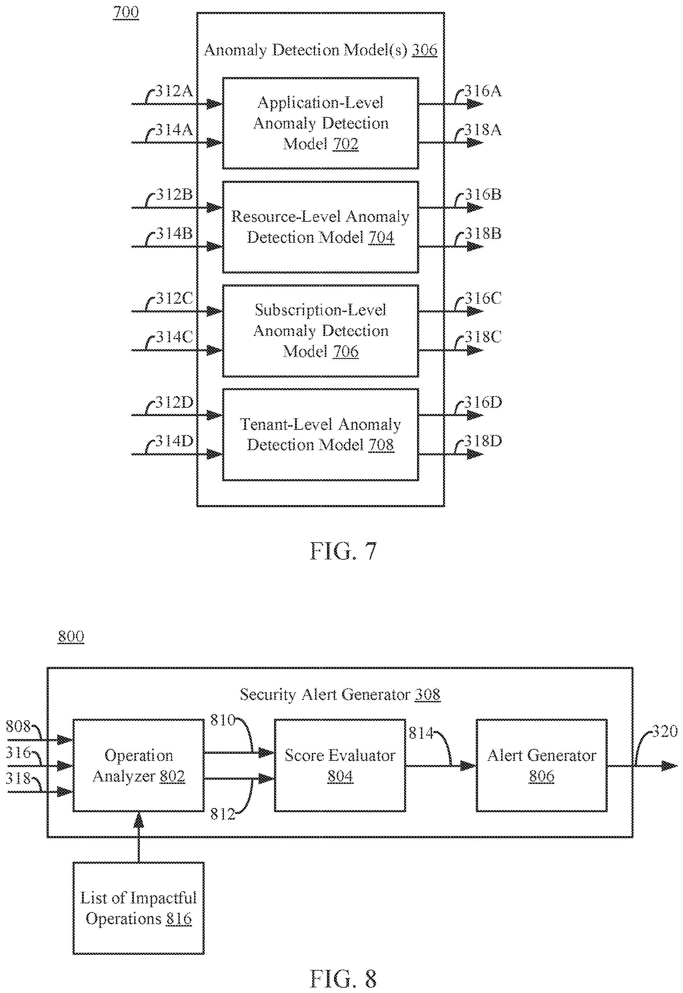

In accordance with an embodiment, anomaly detection model(s) 306 includes two or more anomaly detection models. In this context, respective subsets of feature set 312 are provided to each of the two or more anomaly detection models. Each of the two or more anomaly detection models generates a respective anomaly score of respective anomaly score(s) 316 based on the respective subset of feature set 312 provided thereto. As will be discussed further below with respect to FIGS. 6 and 7, each of anomaly detection models 306 may be a hierarchical multivariate anomaly detection model representing a hierarchy associated with the execution of the control plane operation. For example, in accordance with an embodiment, anomaly detection model(s) 306 include two or more of an application-level anomaly detection model, a resource-level anomaly detection model, a subscription-level anomaly detection model, and/or a tenant-level anomaly detection model.

In step 408, a determination that a security alert should be generated is made based at least on the anomaly score and an indication that the control plane operation is included in a list of impactful operations. Security alert generator 308 of FIG. 3 is configured to determine security alert 320 should be generated based at least on respective anomaly score(s) 316 and an indication that the control plane operation is included in a list of impactful operations. As discussed elsewhere herein, impactful operations are a set of operations that have been determined to have a relatively high impact upon the security of the cloud-based system, an application associated with the cloud-based system, and/or a user associated with the cloud-based system. The list of impactful operations may be stored in a data storage (e.g., data storage(s) 202), in embodiments. The list of impactful operations may be manually generated (e.g., by a developer of threat detection engine 106), automatically generated (e.g., based on impact thresholds), or generated by a combination of automatic and manual techniques. The list of impactful operations may be updated on a periodic or intermittent basis to account for system changes, observed malicious behavior, updated research, or the like.

In accordance with an embodiment, security alert generator 308 determines security alert 320 should be generated based also on respective set(s) of explainability scores 318.

Responsive to security alert generator 308 determining security alert 320 should be generated, flowchart 400 proceeds to step 410. In step 410, responsive to determining that the security alert should be generated, the security alert is generated. Responsive to determining that the security alert should be generated, security alert generator 308 of FIG. 3 is configured to generate security alert 320.

In step 412, a mitigation step may be performed based on the generated security alert. For example, mitigator 310 of FIG. 3 is configured to generate mitigation signal 212 to cause a mitigation step to be performed based on security alert 320. Depending on the mitigation step to be performed, mitigation signal 212 may cause the mitigation step to be performed by one or more of threat detection engine 106, resource manager 104, computing device 102, another component or subcomponent of system 100, and/or another computing device or application, as described elsewhere herein, or as would be understood by a person of skill in the relevant art(s) having benefit of this disclosure.

As described above, threat detection engine 106 of FIG. 3 may include one or more time-series model(s) 304. In accordance with an embodiment, each time-series model of time-series model(s) 304 is a ML model trained to generate a seasonality score that may be provided as a feature to one or more of anomaly detection model(s) 306. Time-series model(s) 304 may be configured to generate seasonality scores in various ways. For example, FIG. 5 depicts a flowchart 500 of a process for generating a seasonality score used in detecting threats for cloud applications, according to an example embodiment. Time-series model(s) 304 may perform each of the steps of FIG. 5. Note that not all steps of flowchart 500 need be performed in all embodiments. Further structural and operational embodiments will be apparent to persons skilled in the relevant art(s) based on the following description of FIG. 5 with respect to FIG. 3.

Flowchart 500 begins with step 502. In step 502, information from the record is received. For example, time-series model(s) 304 of FIG. 3 receives information 322. Information 322 may include one or more features of feature set 312 as well as any other information obtained from the record within logs 210.

In step 504, a seasonality score is generated based on the received information. For example, time-series model(s) 304 of FIG. 3 generate respective seasonality scores 314 based on information 322. **In** accordance with an embodiment, each model of time-series model(s) 304 is an ML model trained to generate a seasonality score based on a time of execution of the control plane operation executed by the cloud application. In accordance with an embodiment, a time-series ML model may be trained for each cloud application associated with system 100 of FIG. 1. In this context, the time-series ML model is trained based on observed activity of the cloud application over a period of time (e.g., one or more hours, days, weeks, months, quarters, years, etc.). Furthermore, it is noted that a time-series ML model may also be trained for a particular resource, resource group, subscription, tenant, or other hierarchical level associated with the control plane operation. A seasonality score may indicate how well the execution of the control plane operation temporally aligns with the expected behavior of the cloud application, resource, resource group, subscription, and/or tenant. For example, if a cloud application typically modifies a compute cluster every Tuesday night, an execution of an operation by the cloud application modifying the compute cluster on a Tuesday night may be assigned a seasonality score indicating an expected behavior and an execution of an operation by the cloud application modifying the compute cluster on a Friday morning may be assigned a seasonality score indicating an unexpected behavior.

As discussed above with respect to step 406 of flowchart 400 of FIG. 4, threat detection engine 106 may provide subsets of feature set 312 to two or more anomaly detection models 306, in embodiments. In accordance with an embodiment, the two or more anomaly detection models may represent or otherwise correspond to a hierarchy associated with the record of the log received by threat detection engine 106, which may be represented in various ways. For example, FIG. 6 is a diagram of a hierarchy 600 ("diagram 600" herein) associated with models used to generate anomaly scores, according to an example embodiment. Further structural and operational examples will be apparent to persons skilled in the relevant art(s) based on the following descriptions. Diagram 600 is described as follows with respect to system 100 of FIG. 1.

Diagram 600 as illustrated details a hierarchy of resources and applications in a network-based (e.g., cloud-based) computing system. For example, a service provider 602 manages the network-based computing system. The network-based computing system may serve one or more tenants (e.g., customers), where tenants are granted access to certain resources and services (e.g., applications) of the network-based computing system. For example, as shown in FIG. 6, the network-based computing system managed by service provider 602 includes a tenant 604 and 606. Each tenant may be associated with one or more subscriptions (e.g., subscriptions 608 and 610), resources (e.g., resources 614 and 616), applications (e.g., applications 618 and 620), and/or the like (e.g., resource groups, clusters of nodes, resource offerings, fleets, etc.).

In FIG. 6, tenant 606 is shown with simplified sub-hierarchy 612, and subscription 610 is shown with resource sub-hierarchy 622 and application sub-hierarchy 624 for brevity; however, it should be understood that these sub-hierarchies may be similar to those shown for tenant 604 and subscription 608, respectively. Hierarchies of segments may contain additional or fewer tiers than those shown in diagram 600 as described herein or as otherwise be understood by persons of skill in the relevant art(s) having the benefit of this disclosure, in embodiments. For example, resources (e.g., resources 614 and 616) may represent resource groups that include respective resource units (e.g., individual resources within a group). Further, different branches of tiers may include sub-hierarchies that differ from other branches. For example, as shown in FIG. 6, tenant 604 is associated with respective subscriptions, resources, and applications; however, tenant 606, for example, may be associated with one or more resources that are not associated with a subscription. Thus, an example hierarchy of a network-based computing system has been described with respect to diagram 600 of FIG. 6. In embodiments, hierarchies such as diagram 600 are used to determine which anomaly detection models should be used to generate anomaly scores for a record of a control plane operation executed by a cloud application, as will be discussed further below with respect to FIG. 7. In embodiments, threat detection engine 106 may reference a representation of hierarchy 600 when providing feature set 312 or a subset of feature set 312 to an anomaly detection model. In accordance with an embodiment, a record of a control plane operation may include an identifier that identifies a resource, application, subscription and/or tenant. For example, a record included in log 210 of FIG. 2 may include a resource ID of resource 614 that can be used to identify resource 614, subscription 608, and tenant 604 and a service ID of application 618 that can be used to identify application 618, subscription 608, and tenant 604. In embodiments, feature set generator 302 of FIG. 3 may use the resource ID and/or service ID to generate feature set 312. As described above, anomaly detection model(s) 306 of FIG. 3 may include one or more anomaly detection models configured to output a respective anomaly score indicative of a degree to which the control plane operation is anomalous based on the feature set (or subset of the feature set) provided thereto. Anomaly detection model(s) 306 may be configured in various ways, in embodiments. For example, FIG. 7 is a block diagram 700 of anomaly detection models 306 of FIG. 3, according to an example embodiment. As shown in FIG. 7, anomaly detection model(s) 306 includes application-level anomaly detection model 702, resource-level anomaly detection model 704, subscription-level anomaly detection 706, and tenant-level anomaly detection model 708. Further structural and operational embodiments will be apparent to persons skilled in the relevant art(s) based on the following description of FIG. 7.

Application-level anomaly detection model 702 is configured to output an application-level anomaly score 316A indicative of a degree to which the execution of the control plane operation is anomalous with respect to the cloud application based on subset 312A of feature set 312 and seasonality score 314A provided thereto. Furthermore, application-level anomaly detection model 702 is configured to generate a set of explainability scores 318A, each explainability score indicative of a weight of a feature of subset 312A in determining application-level anomaly score 316A.

Resource-level anomaly detection model 704 is configured to output a resource-level anomaly score 316B indicative of a degree to which the execution of the control plane operation is anomalous with respect to a resource associated with the control plane operation based on subset 312B of feature set 312 and seasonality score 314B provided thereto. Furthermore, resource-level anomaly detection model 704 is configured to generate a set of explainability scores 318B, each explainability score indicative of a weight of a feature of subset 312B in determining resource-level anomaly score 316A.

Subscription-level anomaly detection model 706 is configured to output a subscription-level anomaly score 316C indicative of a degree to which the execution of the control plane operation is anomalous with respect to a subscription associated with the control plane operation based on subset 312C of feature set 312 and seasonality score 314C provided thereto. Furthermore, subscription-level anomaly detection model 706 is configured to generate a set of explainability scores 318C, each explainability score indicative of a weight of a feature of subset 312C in determining subscription-level anomaly score 316C.

Tenant-level anomaly detection model 708 is configured to output a tenant-level anomaly score 316D indicative of a degree to which the execution of the control plane operation is anomalous with respect to a tenant associated with the control plane operation based on subset 312D of feature set 312 and seasonality score 314D provided thereto. Furthermore, tenant-level anomaly detection model 708 is configured to generate a set of explainability scores 318D, each explainability score indicative of a weight of a feature of subset 312D in determining tenant-level anomaly score 316D. Thus, example anomaly detection models have been described with respect to FIG. 7. In embodiments, subset of feature set 312, such as subsets 312A, 312B, 312C, and 3112D, may include the same, overlapping, and/or different features of feature set 312. For example, in accordance with an embodiment, subset 312A includes a day of the week feature, a resource ID feature, an operation name feature, and a seasonality score, subset 312B includes a service principal ID feature and the operation name feature, subset 312C includes the operation name feature and the service principal ID feature, and subset 312D includes the day of the week feature and the operation name feature. Furthermore, in embodiments, anomaly detection model(s) 306 may include any number of application-level, resource-level, subscription-level, and/or tenant-level anomaly detection models. For example, anomaly detection model(s) 306 may include an anomaly detection model for each tenant, subscription, resource, and application shown in diagram 600 of FIG. 6. For instance, anomaly detection model(s) 306 may include a first tenant-level anomaly detection model for tenant 604, a second tenant-level anomaly detection model for tenant 606, a first subscription-level anomaly detection model for subscription 608, and so-on.

Security alert generator 308 may be configured to generate security alerts in various ways and cause mitigation steps to be performed, in embodiments. For example, FIG. 8 is a block diagram of security alert generator 308 of FIG. 3, according to an example embodiment. As shown in FIG. 8, security alert generator 308 includes an operation analyzer 802, a score evaluator 804, and an alert generator 806. Further structural and operational embodiments will be apparent to persons skilled in the relevant art(s) based on the following description of FIG. 8.

Operation analyzer 802 is configured to analyze anomaly scores 316, sets of explainability scores 318, a list of impactful operations 816, and control plane operation information 808 and to generate a filtered set of anomaly scores 810 and filtered sets of explainability scores 812. Control plane operation information 808 may include information from the record of the control plane operation executed by the cloud application (e.g., such as information included in log 210). List of impactful operations 816 may be any type of list or dataset stored in a data storage (e.g., data storage(s) 202 of FIG. 2).Operation analyzer 802 generates filtered set of anomaly scores 810 and filtered sets of explainability scores 812 by respectively filtering anomaly scores 316 and sets of explainability scores 318 based on whether or not the control plane operation associated with anomaly scores 316 and sets of explainability scores 318 is included in list of impactful operations 816.

Score evaluator 804 is configured to evaluate filtered set of anomaly scores 810 and filtered sets of explainability scores 812 to determine if a security alert should be generated. If score evaluator 804 determines a security alert should be generated, it generates an indication signal 814. Score evaluator 804 may be configured to determine if a security alert should be generated in various ways. For example, score evaluator 804 in accordance with an embodiment may compare anomaly scores 810 against different thresholds or the same threshold. In this context, if one or more anomaly scores are over a respective threshold, score evaluator 804 generates indication signal 814. In accordance with another embodiment, each anomaly score of anomaly scores 810 may contribute to the overall determination for score evaluator 804 to generate indication signal 814. In this context, weights may be assigned to each anomaly score (e.g., a first weight to the application-level anomaly score, a second weight to the resource-level anomaly score, a third weight to a subscription-level anomaly score, and a fourth weight to the tenant-level anomaly score) of anomaly scores 810. Weights may be assigned to anomaly scores automatically (e.g., by score evaluator 804 (e.g., by a ML model training process) or another component of security alert generator 308), manually (e.g., by a developer associated with security alert generator 308), or by a combination of automatic and manual techniques.

Alert generator 806 is configured to generate security alert 320 in response to indication signal 814. In embodiments, security alert 320 may include information associated with filtered set of anomaly scores 810, filtered sets of explainability scores 812, control plane operation information 808, list of impactful operations 816, and/or any other information associated with the control plane operation executed by the cloud application, as described elsewhere herein.

In embodiments, security alert generator 308 may generate security alert 320 based on one record of a control plane operation executed by a cloud application or a plurality of records of control plane operations executed by one or more cloud applications. For example, operation analyzer 802 may determine a plurality of control plane operations across multiple records are included in list of impactful operations 816. In this example, score evaluator 804 is configured to evaluate the anomaly scores and/or explainability scores of the plurality of control plane operations. For example, score evaluator 804 may aggregate control plane operations based on a service ID, an affected resource group, an operation type, and/or any other feature or indicator, as described elsewhere herein, in order to determine that security alert 320 should be generated. If score evaluator 804 determines that security alert 320 should be generated, alert generator 806 generates security alert 320. Security alert 320 may include information associated with each of the control plane operations, respective anomaly scores, respective explainability scores, and/or any other information associated with the aggregated control plane operations. For example, security alert 320 may include a rank of each control plane operation in terms of how impactful the operation is.

### III. Further Example Embodiments and Advantages

As noted above, systems and devices may be configured in various ways for threat detection for cloud applications. Example embodiments have been described with respect to threat detection models corresponding to applications, resources, subscriptions, and tenants associated with execution of a control plane operation; however, it is also contemplated herein that other anomaly detection models may be used. For example, an anomaly detection model corresponding to a user, subset of tenants, regions, offerings, and/or any other hierarchical level associated with a network-based computing system may be trained to generate an anomaly score indicative of a degree the execution of a control plane operation is anomalous based on a feature set provided thereto.

Security alert generators have been described as determining to generate a security alert based at least on an anomaly score and an indication that the control plane operation is included in a list of impactful operations.

Moreover, security alert generators have been described herein as including an operation analyzer configured to determine if a control plane operation is included in a list of impactful operations. However, it is also contemplated herein that other components may determine if the control plane operation is included in a list of impactful operations. Particularly, a threat detection engine in accordance with the present disclosure includes an operation filter that filters received logs based on the list of impactful operation. In this context, only records of impactful operations are analyzed by feature set generators and anomaly detection models described herein. Thus, threat detection engine 106 may be configured to selectively access logs stored in a data storage that are on a list of impactful operations. Alternatively, a component external to the threat detection engine filters logs prior to the threat detection engine receiving them.

Several types of impactful operations have been described herein; however, lists of impactful operations may include other operations, such as, but not limited to, accessing enablement operations, creating and/or activating new (or previously-used) user accounts, creating and/or activating new subscriptions, changing attributes of a user or user group, changing multi-factor authentication settings, modifying federation settings, changing data protection (e.g., encryption) settings, elevating another user account's privileges (e.g., via an admin account), retriggering guest invitation e-mails, and/or other operations that impact the cloud-base system, an application associated with the cloud-based system, and/or a user (e.g., a user account) associated with the cloud-based system.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

### IV. Example Computer System Implementation

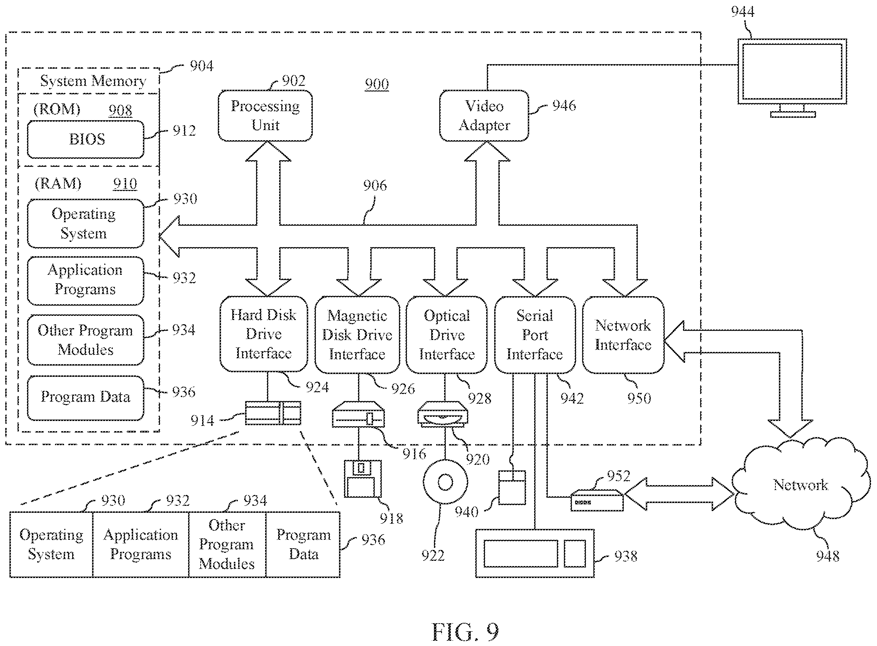

FIG. 9 depicts an example processor-based computer system 900 ("system 900" herein) that may be used to implement various embodiments described herein, such as any of the embodiments described in the Sections above and in reference to FIGS. 1-8. For example, system 900 may be used to implement any of the components of system 100, system 200, block diagram 300, block diagram 700, and system 800, as described above in reference to FIGS. 1-3, 7 and 8 as well as any of the flowcharts described above in reference to FIGS. 4 and 5. The description of system 900 provided herein is provided for purposes of illustration and is not intended to be limiting. Embodiments may be implemented in further types of computer systems, as would be known to persons skilled in the relevant art(s).

As shown in FIG. 9, system 900 includes one or more processors, referred to as processing unit 902, a system memory 904, and a bus 906 that couples various system components including system memory 904 to processing unit 902. Processing unit 902 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processing unit 902 may execute program code stored in a computer readable medium, such as program code of operating system 930, application programs 932, other program modules 934, etc. Bus 906 represents one or more of any of several types of bus structures, including a memory bus or memory controller, a peripheral bus, an accelerated graphics port, and a processor or local bus using any of a variety of bus architectures. System memory 904 includes read only memory (ROM) 908 and random access memory (RAM) 910. A basic input/output system 912 (BIOS) is stored in ROM 908.

System 900 also has one or more of the following drives: a hard disk drive 914 for reading from and writing to a hard disk, a magnetic disk drive 916 for reading from or writing to a removable magnetic disk 918, and an optical disk drive 920 for reading from or writing to a removable optical disk 922 such as a CD ROM, DVD ROM, or other optical media. Hard disk drive 914, magnetic disk drive 916, and optical disk drive 920 are connected to bus 906 by a hard disk drive interface 924, a magnetic disk drive interface 926, and an optical drive interface 928, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 930, one or more application programs 932, other program modules 934, and program data 936. Application programs 932 or other program modules 934 may include, for example, computer program logic (e.g., computer program code or instructions) for implementing the systems described above, including the embodiments described in reference to FIGS. 1-8.

A user may enter commands and information into the system 900 through input devices such as keyboard 938 and pointing device 940. Other input devices (not shown) may include a microphone, joystick, game pad, satellite dish, scanner, a touch screen and/or touch pad, a voice recognition system to receive voice input, a gesture recognition system to receive gesture input, or the like. These and other input devices are often connected to processing unit 902 through a serial port interface 942 that is coupled to bus 906, but may be connected by other interfaces, such as a parallel port, game port, or a universal serial bus (USB).

A display screen 944 is also connected to bus 906 via an interface, such as a video adapter 946. Display screen 944 may be external to, or incorporated in, system 900. Display screen 944 may display information, as well as being a user interface for receiving user commands and/or other information (e.g., by touch, finger gestures, virtual keyboard, etc.). In addition to display screen 944, system 900 may include other peripheral output devices (not shown) such as speakers and printers.

System 900 is connected to a network 948 (e.g., the Internet) through an adaptor or network interface 950, a modem 952, or other means for establishing communications over the network. Modem 952, which may be internal or external, may be connected to bus 906 via serial port interface 942, as shown in FIG. 9, or may be connected to bus 906 using another interface type, including a parallel interface.

As used herein, the terms "computer program medium," "computer-readable medium," and "computer-readable storage medium" are used to generally refer to physical hardware media such as the hard disk associated with hard disk drive 914, removable magnetic disk 918, removable optical disk 922, other physical hardware media such as RAMs, ROMs, flash memory cards, digital video disks, zip disks, MEMs, nanotechnology-based storage devices, and further types of physical/tangible hardware storage media (including system memory 904 of FIG. 9). Such computer-readable storage media are distinguished from and non-overlapping with communication media (do not include communication media). Communication media typically embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media.

Embodiments are also directed to such communication media.

As noted above, computer programs and modules (including application programs 932 and other program modules 934) may be stored on the hard disk, magnetic disk, optical disk, ROM, RAM, or other hardware storage medium. Such computer programs may also be received via network interface 950, serial port interface 952, or any other interface type. Such computer programs, when executed or loaded by an application, enable system 900 to implement features of embodiments discussed herein. Accordingly, such computer programs represent controllers of the system 900. Embodiments are also directed to computer program products comprising computer code or instructions stored on any computer-readable medium. Such computer program products include hard disk drives, optical disk drives, memory device packages, portable memory sticks, memory cards, and other types of physical storage hardware.

### V. Conclusion

While various embodiments have been described above, it should be understood that they have been presented by way of example only, and not limitation. It will be apparent to persons skilled in the relevant art that various changes in form and detail can be made therein without departing from the scope of the embodiments. Thus, the breadth and scope of the embodiments should not be limited by any of the above-described exemplary embodiments, but should be defined only in accordance with the following claims.

## Claims

1. A method (400) comprising:
receiving (402) a log (210) that includes a record of a control plane operation executed by a cloud application;
generating (404) a feature set (312, 312A, 312B, 312C, 312D) based on the record;
providing (406) respective subsets of the feature set to two or more anomaly detection models (306, 702, 704, 706, 708) from among:
an application-level anomaly detection model that is configured to output an application-level anomaly score indicative of a degree to which the execution of the control plane operation is anomalous with respect to the cloud application based on the subset provided thereto,
a resource-level anomaly detection model that is configured to output a resource-level anomaly score indicative of a degree to which the execution of the control plane operation is anomalous with respect to a resource associated with the control plane operation based on the subset provided thereto,
a subscription-level anomaly detection model that is configured to output a subscription-level anomaly score indicative of a degree to which the execution of the control plane operation is anomalous with respect to a subscription associated with the control plane operation based on the subset provided thereto, or
a tenant-level anomaly detection model that is configured to output a tenant-level anomaly score indicative of a degree to which the execution of the control plane operation is anomalous with respect to a tenant associated with the control plane operation based on the subset provided thereto;
determining (408) that a security alert (320) should be generated based at least on the anomaly scores output by the two or more anomaly detection models and an indication that the control plane operation is included in a list of impactful operations (816); and
responsive to determining that the security alert should be generated, generating (410) the security alert;
wherein the determination that the security alert should be generated is based on said indication of the control plane operation being included in the list of impactful operations in that: the method comprises: filtering the log based on the list of impactful operations, such that only records of impactful operations are analyzed by the feature set generator and the one or more anomaly detection models.

2. The method of claim 1, further comprising performing a mitigation step based on the generated security alert, the mitigation step including one or more of:
evaluating recent activity of a service principle associated with the cloud application;
rotating access keys associated with the cloud application; or
denying access to the cloud application.

3. The method of claim 1, wherein the feature set includes one or more of:
a day of the week the control plane operation was executed;
a time of day the control plane operation was executed;
a name of the control plane operation;
a service identifier, ID, of the cloud application; or
a resource ID of the resource associated with control plane operation.

4. The method of claim 1, wherein at least one of the subset of features includes a seasonality score that is obtained by providing information from the record to a time-series model for one of the cloud application, the resource associated with the control plane operation, the subscription associated with the control plane operation, or the tenant associated with the control plane operation, the time-series model being configured to output the seasonality score based on the provided information.

5. The method of claim 1, wherein:
each of the two or more anomaly detection models are configured to output a respective set of explainability scores, each explainability score of the respective set of explainability scores corresponding to a feature of the respective subset of the feature set and indicating a weight of the feature in determining the respective anomaly score; and
said determining that the security alert should be generated is based also on the set of explainability scores output by the two or more anomaly detection models.

6. The method of claim 1, wherein the list of impactful operations includes one or more of:
an operation that, when executed, modifies or creates a rule of a firewall;
an operation that, when executed, accesses authentication keys;
an operation that, when executed, modifies or creates a cluster;
an operation that, when executed, modifies or creates a security alert suppression rule; or
an operation that, when executed, accesses a secret storage.

7. The method of claim 1, wherein said determining that the security alert should be generated is based also on at least one anomaly score associated with another control plane operation executed by the cloud application.

8. A system (100, 200, 300, 900), comprising:
one or more processors (902); and
one or more memory devices (904, 914, 918, 922) that store program code (932) to be executed by the one or more processors, the program code comprising:
a feature set generator (302) configured to:
receive a log (210) that includes a record of a control plane operation executed by a cloud application;
generate a feature set (312, 312A, 312B, 312C, 312D) based on the record;
provide the feature set to an anomaly detection model (306, 702, 704, 706, 708) that is configured to output an anomaly score (316, 316A, 316B, 316C, 316D) indicative of a degree to which the execution of the control plane operation is anomalous based on the feature set provided thereto;
a security alert generator (308) configured to:
determine that a security alert (320) should be generated based at least on the anomaly score and an indication that the control plane operation is included in a list of impactful operations (816);
responsive to determining that the security alert should be generated, generate the security alert;
wherein the determination that the security alert should be generated is based on said indication of the control plane operation being included in the list of impactful operations in that: the program code is configured to filter the log based on the list of impactful operations, such that only records of impactful operations are analyzed by the feature set generator and the one or more anomaly detection models.

9. The system of claim 8, wherein the program code further comprises a mitigator configured to perform a mitigation step based on the generated security alert, the mitigation step including one or more of:
evaluating recent activity of a service principle associated with the cloud application;
rotating access keys associated with the cloud application; or
denying access to the cloud application.

10. The system of claim 8, wherein the security alert generator is configured to determine that the security alert should be generated based at least also on at least one anomaly score associated with another control plane operation executed by the cloud application.

11. The system of claim 8, wherein the list of impactful operations includes one or more of:
an operation that, when executed, modifies or creates a rule of a firewall;
an operation that, when executed, accesses authentication keys;
an operation that, when executed, modifies or creates a cluster;
an operation that, when executed, modifies or creates a security alert suppression rule; or
an operation that, when executed, accesses a secret storage.

12. The system of claim 8, wherein the anomaly detection model is one of:
an application-level anomaly detection model that is configured to output an application-level anomaly score indicative of a degree to which the execution of the control plane operation is anomalous with respect to the cloud application based on the feature set provided thereto;
a resource-level anomaly detection model that is configured to output a resource-level anomaly score indicative of a degree to which the execution of the control plane operation is anomalous with respect to a resource associated with the control plane operation based on the feature set provided thereto;
a subscription-level anomaly detection model that is configured to output a subscription-level anomaly score indicative of a degree to which the execution of the control plane operation is anomalous with respect to a subscription associated with the control plane operation based on the feature set provided thereto; or
a tenant-level anomaly detection model that is configured to output a tenant-level indication indicative of a degree to which the execution of the control plane operation is anomalous with respect to a tenant associated with the control plane operation based on the feature set provided thereto.

13. The system of claim 8, wherein the feature set includes one or more of:
a day of the week the control plane operation was executed;
a time of day the control plane operation was executed;
a name of the control plane operation;
a service identifier, ID, of the cloud application; or
a resource ID of the resource associated with control plane operation.

14. The system of claim 8, where:
the anomaly detection model is further configured to output a set of explainability scores, each explainability score of the set of explainability scores corresponding to a feature of the feature set and indicating a weight of the feature in determining the anomaly score; and
the security alert generator is configured to determine that the security alert should be generated based also on the set of explainability scores output by the anomaly detection model.

15. A computer-readable storage medium (904, 914, 918, 922) having programming instructions (932) encoded thereon that are executable by one or more processors to perform any of the methods of claims 1-7.

## Patentansprüche

1. Verfahren (400), umfassend:
Empfangen (402) eines Protokolls (210), das einen Datensatz einer von einer Cloud-Anwendung ausgeführten Steuerebenenoperation einschließt;
Erzeugen (404) eines Merkmalsatzes (312, 312A, 312B, 312C, 312D), der auf dem Datensatz basiert;
Bereitstellen (406) entsprechender Teilsätze des Merkmalsatzes für zwei oder mehr Anomalieerkennungsmodelle (306, 702, 704, 706, 708) aus:
ein Anomalieerkennungsmodell auf Anwendungsebene, das konfiguriert ist, um eine Anomaliebewertung auf Anwendungsebene auszugeben, die basierend auf dem bereitgestellten Teilsatz angibt, inwieweit die Ausführung der Steuerebenenoperation in Bezug auf die Cloud-Anwendung anomal ist,
einem Anomalieerkennungsmodell auf Ressourcenebene, das konfiguriert ist, um eine Anomaliebewertung auf Ressourcenebene auszugeben, die basierend auf dem bereitgestellten Teilsatz angibt, inwieweit die Ausführung der Steuerebenenoperation in Bezug auf eine mit der Steuerebenenoperation verbundene Ressource anomal ist,
einem Anomalieerkennungsmodell auf Abonnementebene, das konfiguriert ist, um eine Anomaliebewertung auf Abonnementebene auszugeben, die basierend auf dem bereitgestellten Teilsatz angibt, inwieweit die Ausführung der Steuerebenenoperation in Bezug auf ein mit der Steuerebenenoperation verbundenes Abonnement anomal ist, oder
einem Anomalieerkennungsmodell auf Mandantenebene, das konfiguriert ist, um eine Anomaliebewertung auf Mandantenebene auszugeben, die basierend auf dem bereitgestellten Teilsatz angibt, inwieweit die Ausführung der Steuerebenenoperation in Bezug auf einen mit der Steuerebenenoperation verbundenen Mandanten anomal ist;
Bestimmen (408), dass ein Sicherheitsalarm (320) erzeugt werden sollte, der mindestens auf den von den zwei oder mehr Anomalieerkennungsmodellen ausgegebenen Anomaliebewertungen und einer Angabe basiert, dass die Steuerebenenoperation in einer Liste von einschlagenden Operationen (816) eingeschlossen ist; und
als Reaktion auf das Bestimmen, dass der Sicherheitsalarm erzeugt werden sollte, Erzeugen (410) des Sicherheitsalarms;
wobei die Bestimmung, dass der Sicherheitsalarm erzeugt werden sollte, auf der Angabe basiert, dass die Steuerebenenoperation in der Liste der einschlagenden Operationen eingeschlossen ist, indem: das Verfahren Folgendes umfasst: Filtern des Protokolls basierend auf der Liste der einschlagenden Operationen, sodass nur Datensätze von einschlagenden Operationen durch den Satzgenerator und das eine oder mehrere Anomalieerkennungsmodelle analysiert werden.

2. Verfahren nach Anspruch 1, ferner umfassend das Durchführen eines Abschwächungsschritts basierend auf dem erzeugten Sicherheitsalarm, wobei der Abschwächungsschritt einen oder mehreres von Folgendem einschließt:
Bewerten der jüngsten Aktivitäten eines mit der Cloud-Anwendung verbundenen Dienstprinzips;
Drehen der mit der Cloud-Anwendung verbundenen Zugangsschlüssel; oder
Verweigern des Zugangs zur Cloud-Anwendung.

3. Verfahren nach Anspruch 1, wobei der Merkmalsatz eines oder mehreres von Folgendem einschließt:
einen Wochentag, an dem die Steuerebenenoperation ausgeführt wurde;
eine Tageszeit, zu der die Steuerebenenoperation ausgeführt wurde;
einen Namen für die Steuerebenenoperation;
eine Dienstkennung, ID, der Cloud-Anwendung; oder
eine Ressourcen-ID der Ressource, die mit der Steuerebenenoperation verbunden ist.

4. Verfahren nach Anspruch 1, wobei mindestens eines des Teilsatzes von Merkmalen eine Saisonalitätsbewertung einschließt, die durch Bereitstellen von Informationen aus dem Datensatz an ein Zeitreihenmodell für die Cloud-Anwendung, die der Steuerebenenoperation zugeordnete Ressource, das der Steuerebenenoperation zugeordnete Abonnement oder den der Steuerebenenoperation zugeordneten Mandanten erhalten wird, wobei das Zeitreihenmodell konfiguriert ist, um die Saisonalitätsbewertung basierend auf den bereitgestellten Informationen auszugeben.

5. Verfahren nach Anspruch 1, wobei:
jedes der zwei oder mehr Anomalieerkennungsmodelle konfiguriert ist, um einen jeweiligen Satz von Erklärbarkeitsbewertungen auszugeben, wobei jede Erklärbarkeitsbewertung des jeweiligen Satzes von Erklärbarkeitsbewertungen einem Merkmal des jeweiligen Teilsatzes des Merkmalssatzes entspricht und eine Gewichtung des Merkmals bei dem Bestimmen der jeweiligen Anomaliebewertung angibt; und
das Bestimmen, dass der Sicherheitsalarm erzeugt werden soll, basiert auch auf dem Satz von Erklärbarkeitsbewertungen, die von den zwei oder mehr Anomalieerkennungsmodellen ausgegeben werden.

6. Verfahren nach Anspruch 1, wobei die Liste der einschlagenden Operationen eine oder mehreres von Folgendem einschließt:
eine Operation, die, wenn sie ausgeführt wird, eine Regel einer Firewall ändert oder erstellt;
eine Operation, die, wenn sie ausgeführt wird, auf Authentifizierungsschlüssel zugreift;
eine Operation, die, wenn sie ausgeführt wird, einen Cluster modifiziert oder erstellt;
eine Operation, die, wenn sie ausgeführt wird, eine Regel zur Unterdrückung von Sicherheitsalarmen ändert oder erstellt; oder
eine Operation, die, wenn sie ausgeführt wird, auf einen geheimen Speicher zugreift.

7. Verfahren nach Anspruch 1, wobei das Bestimmen, dass der Sicherheitsalarm erzeugt werden sollte, auch auf mindestens einer Anomaliebewertung basiert, die mit einer anderen von der Cloud-Anwendung ausgeführten Steuerebenenoperation verbunden ist.

8. System (100, 200, 300, 900), umfassend:
einen oder mehrere Prozessoren (902); und
eine oder mehrere Speichervorrichtungen (904, 914, 918, 922), die Programmcode (932) speichern, der von dem einen oder den mehreren Prozessoren auszuführen ist, wobei der Programmcode Folgendes umfasst:
einen Merkmalssatzgenerator (302), der konfiguriert ist zum:
Empfangen eines Protokolls (210), das einen Datensatz einer von einer Cloud-Anwendung ausgeführten Steuerebenenoperation einschließt;
Erzeugen eines Merkmalsatzes (312, 312A, 312B, 312C, 312D), der auf dem Datensatz basiert;
Bereitstellen des Merkmalsatzes für ein Anomalieerkennungsmodell (306, 702, 704, 706, 708), das konfiguriert ist, um eine Anomalienbewertung (316, 316A, 316B, 316C, 316D) auszugeben, die basierend auf dem bereitgestellten Merkmalsatz einen Grad angibt, in dem die Ausführung der Steuerebenenoperation anomal ist;
einen Sicherheitsalarmgenerator (308), der konfiguriert ist zum:
Bestimmen, dass ein Sicherheitsalarm (320) mindestens basierend auf der Anomaliebewertung und einer Angabe, dass die Steuerebenenoperation in einer Liste von einschlagenden Operationen (816) eingeschlossen ist, erzeugt werden soll;
als Reaktion auf das Bestimmen, dass der Sicherheitsalarm erzeugt werden sollte, Erzeugen des Sicherheitsalarms;
wobei die Bestimmung, dass der Sicherheitsalarm erzeugt werden sollte, auf der Angabe basiert, dass die Steuerebenenoperation in der Liste der einschlagenden Operationen eingeschlossen ist, indem: der Programmcode konfiguriert ist, um das Protokoll basierend auf der Liste der einschlagenden Operationen zu filtern, sodass nur Datensätze von einschlagenden Operationen durch den Satzgenerator und das eine oder mehrere Anomalieerkennungsmodelle analysiert werden.

9. System nach Anspruch 8, wobei der Programmcode ferner einen Mitigator umfasst, der konfiguriert ist, um einen Mitigationsschritt basierend auf dem erzeugten Sicherheitsalarm durchzuführen, wobei der Mitigationsschritt eines oder mehreres von Folgendem einschließt:
Bewerten der jüngsten Aktivitäten eines mit der Cloud-Anwendung verbundenen Dienstprinzips;
Drehen der mit der Cloud-Anwendung verbundenen Zugangsschlüssel; oder
Verweigern des Zugangs zur Cloud-Anwendung.

10. System nach Anspruch 8, wobei der Sicherheitsalarmgenerator konfiguriert ist, um zu bestimmen, dass der Sicherheitsalarm mindestens auch basierend auf mindestens einer Anomaliebewertung erzeugt werden sollte, die mit einer anderen von der Cloud-Anwendung ausgeführten Steuerebenenoperation verbunden ist.

11. System nach Anspruch 8, wobei die Liste der einschlagenden Operationen eine oder mehreres von Folgendem einschließt:
eine Operation, die, wenn sie ausgeführt wird, eine Regel einer Firewall modifiziert oder erstellt;
eine Operation, die, wenn sie ausgeführt wird, auf Authentifizierungsschlüssel zugreift;
eine Operation, die, wenn sie ausgeführt wird, einen Cluster modifiziert oder erstellt;
eine Operation, die, wenn sie ausgeführt wird, eine Regel zur Unterdrückung von Sicherheitsalarmen ändert oder erstellt; oder
eine Operation, die, wenn sie ausgeführt wird, auf einen geheimen Speicher zugreift.

12. System nach Anspruch 8, wobei das Anomalieerkennungsmodell eines von Folgendem ist:
ein Anomalieerkennungsmodell auf Anwendungsebene, das konfiguriert ist, um eine Anomaliebewertung auf Anwendungsebene auszugeben, die basierend auf dem bereitgestellten Merkmalssatz angibt, inwieweit die Ausführung der Steuerebenenoperation in Bezug auf die Cloud-Anwendung anomal ist;
einem Anomalieerkennungsmodell auf Ressourcenebene, das konfiguriert ist, um eine Anomaliebewertung auf Ressourcenebene auszugeben, die basierend auf dem bereitgestellten Merkmalssatz angibt, inwieweit die Ausführung der Steuerebenenoperation in Bezug auf eine mit der Steuerebenenoperation verbundene Ressource anomal ist;
einem Anomalieerkennungsmodell auf Abonnementebene, das konfiguriert ist, um eine Anomaliebewertung auf Abonnementebene auszugeben, die basierend auf dem bereitgestellten Merkmalssatz angibt, inwieweit die Ausführung der Steuerebenenoperation in Bezug auf ein mit der Steuerebenenoperation verbundenes Abonnement anomal ist; oder
einem Anomalieerkennungsmodell auf Mandantenebene, das konfiguriert ist, um eine Anomaliebewertung auf Mandantenebene auszugeben, die basierend auf dem bereitgestellten Merkmalssatz angibt, inwieweit die Ausführung der Steuerebenenoperation in Bezug auf einen mit der Steuerebenenoperation verbundenen Mandanten anomal.

13. System nach Anspruch 8, wobei der Merkmalsatz eines oder mehreres von Folgendem einschließt:
einen Wochentag, an dem die Steuerebenenoperation ausgeführt wurde;
eine Tageszeit, zu der die Steuerebenenoperation ausgeführt wurde;
einen Namen für die Steuerebenenoperation;
eine Dienstkennung, ID, der Cloud-Anwendung; oder
eine Ressourcen-ID der Ressource, die mit der Steuerebenenoperation verbunden ist.

14. System nach Anspruch 8, wobei:
das Anomalieerkennungsmodell ferner konfiguriert ist, um einen Satz von Erklärbarkeitsbewertungen auszugeben, wobei jede Erklärbarkeitsbewertung des Satzes von Erklärbarkeitsbewertungen einem Merkmal des Merkmalssatzes entspricht und eine Gewichtung des Merkmals bei dem Bestimmen der Anomaliebewertung angibt; und
der Sicherheitsalarmgenerator konfiguriert ist, um zu bestimmen, dass der Sicherheitsalarm basierend auch auf dem Satz von Erklärbarkeitsbewertungen, die von dem Anomalieerkennungsmodell ausgegeben werden, erzeugt werden sollte.

15. Computerlesbares Speichermedium (904, 914, 918, 922), das darauf kodierte Programmieranweisungen (932) aufweist, die von einem oder mehreren Prozessoren ausgeführt werden können, um eines der Verfahren der Ansprüche 1 bis 7 durchzuführen.

## Revendications

1. Procédé (400) comprenant :
la réception (402) d'un journal (210) qui comporte un enregistrement d'une opération du plan de contrôle exécutée par une application cloud ;
la génération (404) d'un ensemble de caractéristiques (312, 312A, 312B, 312C, 312D) en fonction de l'enregistrement ;
la fourniture (406) des sous-ensembles respectifs de l'ensemble de caractéristiques à deux ou plusieurs modèles de détection d'anomalies (306, 702, 704, 706, 708) choisis parmi :
un modèle de détection d'anomalies au niveau de l'application, configuré pour émettre un score d'anomalie au niveau de l'application indiquant dans quelle mesure l'exécution de l'opération du plan de contrôle est anormale par rapport à l'application cloud, en fonction du sous-ensemble fourni à celui-ci,
un modèle de détection d'anomalies au niveau de la ressource, configuré pour émettre un score d'anomalie au niveau de la ressource indiquant dans quelle mesure l'exécution de l'opération du plan de contrôle est anormale par rapport à une ressource associée à l'opération du plan de contrôle, en fonction du sous-ensemble fourni à celui-ci,
un modèle de détection d'anomalies au niveau de l'abonnement, configuré pour émettre un score d'anomalie au niveau de l'abonnement indiquant dans quelle mesure l'exécution de l'opération du plan de contrôle est anormale par rapport à un abonnement associé à l'opération du plan de contrôle, en fonction du sous-ensemble fourni à celui-ci, ou
un modèle de détection d'anomalies au niveau du locataire, configuré pour émettre un score d'anomalie au niveau du locataire indiquant dans quelle mesure l'exécution d'une opération du plan de contrôle est anormale par rapport à un locataire associé à l'opération du plan de contrôle, en fonction du sous-ensemble fourni à celui-ci ;
la détermination (408) qu'une alerte de sécurité (320) doit être générée en fonction, au moins, des scores d'anomalie émis par les deux ou plusieurs modèles de détection d'anomalies et d'une indication que l'opération du plan de contrôle est incluse dans une liste d'opérations ayant un impact (816) ; et
en réponse à la détermination que l'alerte de sécurité doit être générée, la génération (410) de l'alerte de sécurité ;
dans lequel la détermination que l'alerte de sécurité doit être générée est en fonction du fait que ladite indication de fonctionnement du plan de contrôle est incluse dans la liste des opérations ayant un impact, en ce que : le procédé comprend : le filtrage du journal en fonction de la liste des opérations ayant un impact, de telle sorte que seuls les enregistrements d'opérations ayant un impact soient analysés par le générateur d'ensembles de caractéristiques et par le ou les modèles de détection d'anomalies.

2. Procédé selon la revendication 1, comprenant en outre la mise en œuvre d'une étape d'atténuation en fonction de l'alerte de sécurité générée, l'étape d'atténuation comportant un ou plusieurs parmi :
l'évaluation de l'activité récente d'un principe de service associé à l'application cloud ;
la rotation des clés d'accès associées à l'application cloud ; ou
le refus d'accès à l'application cloud.

3. Procédé selon la revendication 1, dans lequel l'ensemble de caractéristiques comporte un ou plusieurs parmi :
un jour de la semaine où l'opération du plan de contrôle a été exécutée ;
un moment de la journée où l'opération du plan de contrôle a été exécutée ;
un nom de l'opération du plan de contrôle ;
un identifiant de service, ID, de l'application cloud ; ou
un ID de ressource de la ressource associée au fonctionnement du plan de contrôle.

4. Procédé selon la revendication 1, dans lequel au moins un des sous-ensembles de caractéristiques comporte un score de saisonnalité qui est obtenu en fournissant des informations issues de l'enregistrement à un modèle de séries chronologiques pour l'une des applications cloud, la ressource associée à l'opération du plan de contrôle, l'abonnement associé à l'opération du plan de contrôle ou le locataire associé à l'opération du plan de contrôle, le modèle de séries chronologiques étant configuré pour émettre le score de saisonnalité en fonction des informations fournies.

5. Procédé selon la revendication 1, dans lequel :
chacun des deux ou plusieurs modèles de détection d'anomalies est configuré pour émettre un ensemble respectif de scores d'explicabilité, chaque score d'explicabilité de l'ensemble respectif de scores d'explicabilité correspondant à une caractéristique du sous-ensemble respectif de l'ensemble de caractéristiques et indiquant un poids de la caractéristique dans la détermination du score d'anomalie respectif ; et
ladite détermination que l'alerte de sécurité doit être générée est également en fonction de l'ensemble des scores d'explicabilité émis par les deux ou plusieurs modèles de détection d'anomalies.

6. Procédé selon la revendication 1, dans lequel la liste des opérations ayant un impact comporte un ou plusieurs parmi :
une opération qui, lorsqu'elle est exécutée, modifie ou crée une règle d'un pare-feu ;
une opération qui, lorsqu'elle est exécutée, accède à des clés d'authentification ;
une opération qui, lorsqu'elle est exécutée, modifie ou crée un cluster ;
une opération qui, lorsqu'elle est exécutée, modifie ou crée une règle de suppression d'alerte de sécurité ; ou
une opération qui, lorsqu'elle est exécutée, accède à un stockage secret.

7. Procédé selon la revendication 1, dans lequel ladite détermination que l'alerte de sécurité doit être générée est également en fonction au moins d'un score d'anomalie associé à une autre opération du plan de contrôle exécutée par l'application cloud.

8. Système (100, 200, 300, 900), comprenant :
un ou plusieurs processeurs (902) ; et
un ou plusieurs dispositifs de mémoire (904, 914, 918, 922) qui stockent un code de programme (932) destiné à être exécuté par le ou les processeurs, le code de programme comprenant :
un générateur d'ensembles de caractéristiques (302) configuré pour :
recevoir un journal (210) qui comporte un enregistrement d'une opération du plan de contrôle exécutée par une application cloud ;
générer un ensemble de caractéristiques (312, 312A, 312B, 312C, 312D) en fonction de l'enregistrement ;
fournir l'ensemble de caractéristiques à un modèle de détection d'anomalies (306, 702, 704, 706, 708) qui est configuré pour émettre un score d'anomalie (316, 316A, 316B, 316C, 316D) indiquant dans quelle mesure l'exécution de l'opération du plan de contrôle est anormale, en fonction de l'ensemble de caractéristiques fourni à celui-ci ;
un générateur d'alerte de sécurité (308) configuré pour :
déterminer qu'une alerte de sécurité (320) doit être générée en fonction, au moins, du score d'anomalie et d'une indication que l'opération du plan de contrôle est incluse dans une liste d'opérations ayant un impact (816) ;
en réponse à la détermination que l'alerte de sécurité doit être générée, générer l'alerte de sécurité ;
dans lequel la détermination que l'alerte de sécurité doit être générée est en fonction du fait que ladite indication de fonctionnement du plan de contrôle est incluse dans la liste des opérations ayant un impact, en ce que : le code de programme est configuré pour filtrer le journal en fonction de la liste des opérations ayant un impact, de telle sorte que seuls les enregistrements d'opérations ayant un impact soient analysés par le générateur d'ensembles de caractéristiques et par le ou les modèles de détection d'anomalies.

9. Système selon la revendication 8, dans lequel le code de programme comprend en outre un module d'atténuation configuré pour mettre en œuvre une étape d'atténuation en fonction de l'alerte de sécurité générée, l'étape d'atténuation comportant un ou plusieurs parmi :
l'évaluation de l'activité récente d'un principe de service associé à l'application cloud ;
la rotation des clés d'accès associées à l'application cloud ; ou
le refus d'accès à l'application cloud.

10. Système selon la revendication 8, dans lequel le générateur d'alerte de sécurité est configuré pour déterminer que l'alerte de sécurité doit être générée en fonction au moins également d'un score d'anomalie associé à une autre opération du plan de contrôle exécutée par l'application cloud.

11. Système selon la revendication 8, dans lequel la liste des opérations ayant un impact comporte une ou plusieurs parmi :
une opération qui, lorsqu'elle est exécutée, modifie ou crée une règle d'un pare-feu ;
une opération qui, lorsqu'elle est exécutée, accède à des clés d'authentification ;
une opération qui, lorsqu'elle est exécutée, modifie ou crée un cluster ;
une opération qui, lorsqu'elle est exécutée, modifie ou crée une règle de suppression d'alerte de sécurité ; ou
une opération qui, lorsqu'elle est exécutée, accède à un stockage secret.

12. Système selon la revendication 8, dans lequel le modèle de détection d'anomalies est l'un parmi :
un modèle de détection d'anomalies au niveau de l'application, configuré pour émettre un score d'anomalie au niveau de l'application indiquant dans quelle mesure l'exécution de l'opération du plan de contrôle est anormale par rapport à l'application cloud, en fonction de l'ensemble de caractéristiques fourni à celui-ci ;
un modèle de détection d'anomalies au niveau de la ressource, configuré pour émettre un score d'anomalie au niveau de la ressource indiquant dans quelle mesure l'exécution de l'opération du plan de contrôle est anormale par rapport à une ressource associée à l'opération du plan de contrôle, en fonction de l'ensemble de caractéristiques fourni à celui-ci ;
un modèle de détection d'anomalies au niveau de l'abonnement, configuré pour émettre un score d'anomalie au niveau de l'abonnement indiquant dans quelle mesure l'exécution de l'opération du plan de contrôle est anormale par rapport à un abonnement associé à l'opération du plan de contrôle, en fonction de l'ensemble de caractéristiques fourni à celui-ci ; ou
un modèle de détection d'anomalies au niveau du locataire, configuré pour émettre une indication d'anomalie au niveau du locataire indiquant dans quelle mesure l'exécution d'une opération du plan de contrôle est anormale par rapport à un locataire associé à l'opération du plan de contrôle, en fonction de l'ensemble de caractéristiques fourni à celui-ci.

13. Système selon la revendication 8, dans lequel l'ensemble de caractéristiques comporte un ou plusieurs parmi :
un jour de la semaine où l'opération du plan de contrôle a été exécutée ;
un moment de la journée où l'opération du plan de contrôle a été exécutée ;
un nom de l'opération du plan de contrôle ;
un identifiant de service, ID, de l'application cloud ; ou
un ID de ressource de la ressource associée au fonctionnement du plan de contrôle.

14. Système selon la revendication 8, où :
le modèle de détection d'anomalies est en outre configuré pour émettre un ensemble de scores d'explicabilité, chaque score d'explicabilité de l'ensemble de scores d'explicabilité correspondant à une caractéristique de l'ensemble de caractéristiques et indiquant un poids de la caractéristique dans la détermination du score d'anomalie ; et
le générateur d'alerte de sécurité est configuré pour déterminer que l'alerte de sécurité doit être générée en fonction également de l'ensemble des scores d'explicabilité émis par le modèle de détection d'anomalies.

15. Support de stockage lisible par ordinateur (904, 914, 918, 922) sur lequel sont codées des instructions de programmation (932) pouvant être exécutées par un ou plusieurs processeurs afin de mettre en œuvre l'un quelconque des procédés selon revendications 1-7.
